Europäisches Patentamt

European Patent Office

Office européen des brevets

(11) Veröffentlichungsnummer: **0 285 988 B1**

# (12) EUROPÄISCHE PATENTSCHRIFT

(45) Veröffentlichungstag der Patentschrift: **11.12.91**

(51) Int. Cl.⁵: **A21B 3/13**

(21) Anmeldenummer: **88105092.6**

(22) Anmeldetag: **29.03.88**

(54) **Springform.**

(30) Priorität: **31.03.87 DE 8704729 U**

(43) Veröffentlichungstag der Anmeldung:
**12.10.88 Patentblatt 88/41**

(45) Bekanntmachung des Hinweises auf die
Patenterteilung:
**11.12.91 Patentblatt 91/50**

(84) Benannte Vertragsstaaten:
**AT CH DE ES GB IT LI NL SE**

(56) Entgegenhaltungen:
**FR-A- 2 179 526
FR-A- 2 567 778
FR-A- 2 585 731
GB-A- 139 291
GB-A- 196 811**

(73) Patentinhaber: **W.F. KAISER U. CO. GMBH**
**Elisenstrasse 5**
**W-5408 Nassau/Lahn(DE)**

(72) Erfinder: **Sondermann, Karl Ferdinand**
**Viktoriastrasse 8**
**W-6254 Elz(DE)**

(74) Vertreter: **Buschhoff, Josef, Dipl.-Ing. et al**
**Patentanwälte Dipl.-Ing. Buschhoff Dipl.-Ing.**
**Hennicke, Dipl.-Ing. Vollbach Kaiser-**
**Wilhelm-Ring 24 Postfach 190 408**
**W-5000 Köln 1(DE)**

**Beschreibung**

Die Erfindung betrifft eine Springform, bestehend aus einer kreisrunden, am Umfang einen Bördelrand aufweisenden Bodenplatte und einem diese mit Klemmung umschließenden, mit einem Spannverschluß versehenen Randteil.

Springformen dieser Art, bei denen der Bördelrand als eine an einer aufragenden Randabkantung der Bodenplatte angeformte Bördelrolle ausgeführt ist, sind seit langem gebräuchlich. Dabei ist es auch bekannt, die Bodenplatte an ihrem Umfang mit einer gegen ihre Oberseite gedrückten Flachbördelung zu versehen (GB-A-123 291) oder aber an der Bodenplatte einen aufragenden, ungebördelten Umfangsrand anzuformen (GB-A- 196 811). Die gebräuchlichen Springformen werden zumeist mit einer Antihaftbeschichtung, wie einer Silicon- oder PTFE-Beschichtung (Polytetrafluoräthylen) versehen, um das Ausformen des Kuchens zu erleichtern und zu vermeiden, daß das Backgut an der Form festhaftet.

Es ist auch seit langem bekannt, Haushalts- und Küchengeräte sowie sonstige Gebrauchsgegenstände, wie z.B. Kochtöpfe, Eimer oder auch Backbleche, zu emaillieren, wobei im Bedarfsfall auch säurebeständige Emailüberzüge vorgesehen werden. Obwohl emaillierte Gebrauchsgegenstände seit langem in breiter Anwendung gebräuchlich sind, hat man bei der Herstellung von Springformen von den in dieser Hinsicht bestehenden Möglichkeiten keinen Gebrauch gemacht. Statt dessen ist man in der Praxis den Weg gegangen, die herkömmlichen Springformen mit Antihaftbeschichtungen unterschiedlicher Art zu versehen. Die bekannten Antihaftbeschichtungen haben aber durchweg den Nachteil, daß sie wenig kratz- und schnittfest sind. Insbesondere beim Schneiden des Kuchens auf dem Springformboden wird die Antihaftbeschichtung oftmals mechanisch verletzt, wodurch die Antihafteigenschaften verlorengehen und die Springform letztlich unbrauchbar wird. Eine Schnitt- oder Kratzverletzung der Antihaftbeschichtung des Springformbodens kann sich auch dann leicht ergeben, wenn der fertige Kuchen mittels eines Tortenmessers, eines Kuchenhebers oder eines sonstigen Hilfsgerätes vom Springformboden abgehoben wird.

Aufgabe der Erfindung ist es, eine in den Gebrauchseigenschaften verbesserte Springform zu schaffen, deren Bodenbeschichtung sich vor allem durch hohe Kratz- und Schnittfestigkeit sowie möglichst auch durch Säurebeständigkeit auszeichnet.

Diese Aufgabe wird durch eine Springform gemäß dem Patentanspruch 1 gelöst. Vorteilhafte Ausgestaltungsmerkmale der Erfindung sind in den Ansprüchen 2 und 3 angegeben.

Die gegenüber der Blechdicke der herkömmlichen Springformböden beträchtlich erhöhte Dicke des für die Bodenplatte verwendeten Stahlblechs führt zu einem weitgehend biegeund verwindungssteifen Springformboden und gewährleistet damit auch eine für den Küchengebrauch zuverlässige Haftung des Emailüberzuges auf dem Bodenblech. Ein Aufreißen oder Abplatzen des spröden Emailüberzugs durch Verformen des Springformbodens wird damit sicher verhindert. Auch kann es beim Emailliervorgang zu keinem Verzug des Bodenblechs kommen. Da an der den Springformboden bildenden Bodenplatte nur glatte bzw. ebene und am umfangseitigen Bördelrand nur nach außen hin offene gerundete Flächen vorhanden sind, ist die Bodenplatte beidseitig vollständig einwandfrei emaillierbar. Dabei wird die einwandfreie Emailbeschichtung dadurch begünstigt, daß die Umfangsbördelung sich nunmehr an der Unterseite der Bodenplatte befindet und dabei zugleich als geöffnete Bördelrolle ausgeführt ist. Der Bördelrand liegt demgemäß unterhalb der eigentlichen Oberfläche bzw. Backfläche des Springformbodens, die somit auf ganzer Fläche bis zum Außenumfang hin glatt ist und damit eine einwandfreie Emailbeschichtung mit hoher Qualität ermöglicht. Da der Bördelrand nur etwa zu einer Halbrolle umgebördelt ist, kann der Emailüberzug auch im Inneren des Bördelrandes bzw. der Bördelrolle einwandfrei aufgebracht werden. Der Bördelrand dient im übrigen, wie bekannt, zur Einspannung der Bodenplatte in dem spannbaren Randteil der Springform. Zugleich ergeben sich mit der erfindungsgemäßen Gestaltung der Springform auch Vorteile in Bezug auf die Durchführung des Emaillierprozesses. Die zu emaillierende Bodenplatte kann mittels eines in die offene Bördelrolle eingeführten Hakens den Emaillierprozeß hängend durchlaufen.

Mit der Erfindung werden auch die Gebrauchseigenschaften der Springform verbessert und darüber hinaus backtechnische Vorteile erzielt. Der auf den Springformboden beidseitig aufgebrachte Emailüberzug ist kratzfest und erleichtert auch das Reinigen der Bodenplatte. Eine Verletzung des Emailüberzuges beim Schneiden des Kuchens auf der Bodenplatte ist nicht zu befürchten. Der Springformboden läßt sich aufgrund seiner größeren Dicke und Formstabilität besser als bisher als Ablage bzw. Tragboden für den fertigen und ausgeformten Kuchen verwenden, wobei die nach unten gerichtete Umbördelung einen Stützfuß bildet. Der Emailüberzug weist auch eine verhältnismäßig gute Antihafteigenschaft auf. Diese läßt sich durch entsprechende Einstellung des Emails bzw. durch geeignete Emailzusätze günstig beeinflussen. Aufgrund der Emailbeschichtung und der sich aus der nach unten weisenden Umbördelung ergebenden ebenflächigen Oberseite des Springformbodens lassen sich die Kuchen leicht von der Bodenplatte seitlich abschieben. Der Kuchen muß also nicht mit Hilfe eines Hilfsgerätes, z.B. eines Tortenmessers, vom Springformboden abgehoben werden, wie dies bisher erforderlich war.

Es hat sich gezeigt, daß bei Verwendung der aus dem dickeren Stahlblech gefertigten, beidseitig emaillierten Bodenplatte im Vergleich zu den herkömmlichen Springformböden die Backwärme besser gehalten und auch die Backzeit deutlich vermindert wird, wobei zugleich die Emailbeschichtung das Backergebnis begünstigt und eine bessere Bräunung des Kuchens bewirkt.

Der mit dem Spannverschluß versehene Randteil der erfindungsgemäßen Springform erhält keinen Emailüberzug. Er wird zweckmäßig mit einer an sich bekannten Antihaftbeschichtung, vorzugsweise einer Silikon- oder PTFE-Beschichtung od.dgl., versehen.

In der Zeichnung ist ein Ausführungsbeispiel der Erfindung dargestellt. Es zeigen:

Figur 1    eine Springform in starker schematischer Vereinfachung und in perspektivischer Darstellung;

Figur 2    in erheblicher Vergrößerung und in einer Teilschnittdarstellung die emaillierte Bodenplatte der in Fig. 1 gezeigten Springform.

Die dargestellte Springform besteht, wie bekannt, aus einer kreisrunden Bodenplatte 1 und einem die Bodenplatte 1 umschließenden und einspannenden Randteil 2, das als geschlitzter Spannring ausgebildet und mit einem Spannverschluß 3 versehen ist, mit dessen Hilfe sich der geschlitzte Spannring zusammenziehen und damit das Bodenteil 1 im Randteil 2 der Springform einspannen und festlegen läßt. Springformen dieser Art sind allgemein gebräuchlich und bedürfen daher keiner weiteren Erläuterung.

Das Randteil 2 ist aus einem Blechstreifen gefertigt und weist am oberen und unteren Rand eine Umbördelung sowie in Nähe des unteren Randes innenseitig eine umlaufende Rille auf, in die sich die Bodenplatte 1 mit ihrem Rand legt. Das Randteil ist, wie bekannt, mit einer Antihaftbeschichtung versehen, vorzugsweise einer Silikonbeschichtung, obwohl auch PTFE-Beschichtungen u.dgl. geeignet sind.

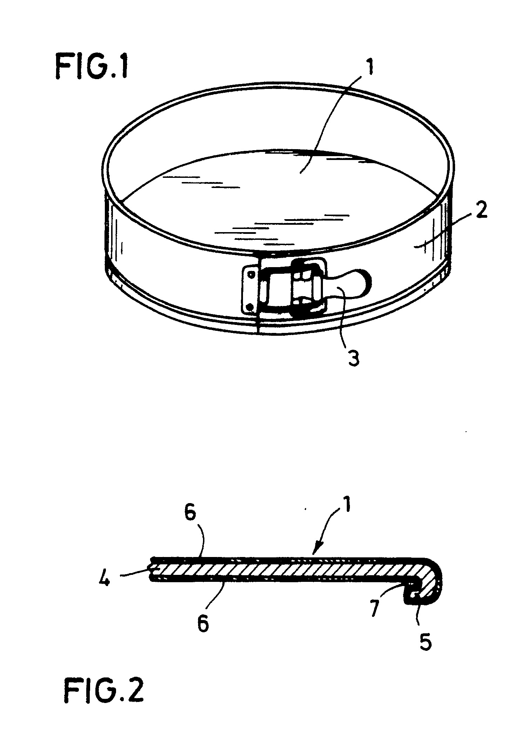

Abweichend von dem Randteil ist die Bodenplatte 2 der Springform mit einem Emailüberzug aus einem kratz- und schnittfesten sowie säurebeständigen Email versehen. Die Bodenplatte 2 ist gemäß Fig. 2 aus einem emaillierfähigen Stahlblech 4 mit einer Dicke von mindestens 0,5 mm, vorzugsweise 0,6 mm bis etwa 0,8 mm, gefertigt. Der kreisrunde Stahlblechboden 4 ist am Außenrand nach unten unter Bildung einer etwa halben Bördelrolle 5 umgebördelt, wodurch am Umfang der Bodenplatte ein steifer Umfangswulst für die Einspannung der Bodenplatte 1 im Randteil 2 gebildet wird. Der so gebördelte Stahlblechzuschnitt ist sowohl auf seiner Oberseite als auch auf seiner Unterseite mit dem Emailüberzug 6 versehen. Die halbe Bördelung unter Bildung der halben Bördelrolle 5 ermöglicht es, den Emailleüberzug auch in den Innenbereich 7 der Bördelrolle einzubringen. Die mit dem kratz- und schnittfesten sowie säurebeständigen Emailüberzug 6 versehene Bodenplatte 2 ist weitgehend biege- und verformungssteif, so daß ein Abplatzen des spröden Emailüberzugs im Gebrauch nicht zu erwarten ist. Die verhältnismäßig schwere Bodenplatte 2 der Springform begünstigt den Backvorgang, da hierdurch eine gleichmäßigere intensive Bräunung des Kuchens begünstigt wird. Die dichte, geschlossene und hochglänzende Oberfläche des Emailüberzuges 6 erlaubt auch ein leichtes Reinigen der Bodenplatte und verhindert außerdem weitgehend ein unerwünschtes Anhaften des Kuchens am Boden.

Der Emailüberzug 6 kann unterschiedliche Einfärbungen erhalten, so daß auch ansprechende Farbgestaltungen der Springform erreichbar sind.

## Patentansprüche

1.  Springform, bestehend aus einer kreisrunden, am Umfang einen Bördelrand (5) aufweisenden Bodenplatte (1) und einem diesen mit Klemmung umschließenden, mit einem Spannverschluß (3) versehenen Randteil (2), **dadurch gekennzeichnet,** daß

    -   die biege- und verwindungssteife Bodenplatte (1) aus einem Stahlblech mit einer Dicke von mindestens 0,5 mm besteht, die auf ihrer Oberseite und ihrer Unterseite als Beschichtung einen Emailüberzug (6) aus einer kratzund schnittfesten sowie säurebeständigen Emaille aufweist, und daß
    -   der Bördelrand (5) der Bodenplatte (1) von einer zu deren Unterseite hin gerichteten Umbördelung in Gestalt einer etwa halben Bördelrolle gebildet ist.

2.  Springform nach Anspruch 1, **dadurch gekennzeichnet,** daß das die Bodenplatte (1) bildende Stahlblech eine Dicke von 0,6 mm bis 0,8 mm aufweist.

3.  Springform nach Anspruch 1 oder 2, **dadurch gekennzeichnet,** daß das Randteil (3) mit einer ansich bekannten Antihaftbeschichtung, vorzugsweise einer Silikon- oder PTFE-Beschichtung od. dgl., versehen ist.

## Claims

1. Spring baking tin, consisting of a circular base plate (1) having a flanged edge (5) at the circumference, and of a hoop part (2) surrounding the flanged edge (5) in clamping fashion and provided with a bent-lever closure (3), characterised in that
   - the rigid and non-buckling base plate (1) consists of a steel sheet with a thickness of at least 0.5 mm, which has, on its top side and its underside as a coating, an enamel layer (6) of a non-scratch, cut-resistant and acid-proof enamel, and in that
   - the flanged edge (5) of the base plate (1) is formed from a bead pointing towards the underside of the base plate (1) and in the form of an approximately half-rolled flanged edge.

2. Spring baking tin according to Claim 1, characterised in that the steel sheet forming the base plate (1) has a thickness of from 0.6 mm to 0.8 mm.

3. Spring baking tin according to Claim 1 or 2, characterised in that the hoop part (2) is provided with a non-stick coating known per se, preferably a silicon or PTFE coating or the like.

**Revendications**

1. Moule démontable, composé d'une plaque de fond (1) circulaire avec un collet bordé (5) périphérique et d'une pièce-ceinture (2) entourant le collet bordé avec un effet de serrage et comportant une fermeture (3) à serrage, caractérisé en ce que

   - la plaque de fond (1), résistante à la flexion et à la distorsion, consiste en une tôle d'acier avec une épaisseur minimale de 0,5 mm émaillée du côté supérieur et du côté inférieur avec un émail (6) résistant aux éraflures et aux coupures, ainsi qu'aux acides, et en ce que
   - le collet bordé (5) de la plaque de fond (1) est formé par un bord rabattu vers le côté inférieur sous forme d'environ un demi-rouleau.

2. Moule selon la revendication 1, caractérisé en ce que la tôle d'acier formant la plaque de fond (1) a une épaisseur de 0,6 mm à 0,8 mm.

3. Moule selon la revendication 1 ou 2, caractérisé en ce que la pièce-ceinture (2) est revêtue d'une couche antiadhésive, connue en soi, de préférence d'une couche en silicone, en PTFE ou similaire.

FIG.1

FIG.2